# EUROPEAN PATENT APPLICATION

(11) **EP 4 462 381 A1**
(43) Date of publication of application: **13.11.2024**
(21) Application number: 23305748.8
(22) Date of filing: 12.05.2023
(51) Int. Cl.: G06V 10/82

(54) **METHODS AND SYSTEMS FOR IMAGE CLASSIFICATION**

(71) Applicant: S.A. Vitec, 75008 Paris (FR)
(72) Inventor: Markus, Hansen, 24113 KIEL (DE)
(74) Representative: Plasseraud IP

(57) **Abstract**

The disclosure relates to a method implemented by computer means for classifying images and to a corresponding computer system and a corresponding computer program.

The method comprises:
- using an image preprocessor, extracting image data representing at least one image feature of an image to obtain a first tensor representing the extracted image data,
- using a metadata preprocessor, processing metadata representing a contextual information of the image to obtain a second tensor representing the processed metadata,
- using a combinator, combining the first tensor and the second tensor to obtain a combination result, and
- providing the combination result to an image classification layer of an artificial neural network to obtain a classification result.

## Description

### FIELD OF THE INVENTION

The present invention relates in general to image classification, and more particularly to a method implemented by computer means for classifying images and to a corresponding computer system and a corresponding computer program.

### BACKGROUND OF THE INVENTION

In the field of image classification, it is known to use artificial neural networks (ANN), particularly convolutional neural networks (CNN), to classify images based on features such as shapes, color gradients, and abstract sets of pixels.

In essence, CNNs are used for image classification by taking input image data and producing a distribution over the trained classes. However, predicting certain images can be difficult if they deviate from the norm, such as when the primary object is in an unusual environment or when the image quality is poor (due potentially to various factors such as low resolution, compression artifacts, uneven lighting, color issues, etc.). As a result, CNNs can experience a significant reduction in accuracy, whereas humans rely on context information to identify images when they deviate from the norm.

There is a need for an image classification technique that allows better handling images that deviate from the norm, and that enables automatically identifying objects in images having a low quality.

### SUMMARY OF THE INVENTION

It is proposed a method implemented by computer means for classifying images, the method comprising:
- using an image preprocessor, extracting image data representing at least one image feature of an image to obtain a first tensor representing the extracted image data,
- using a metadata preprocessor, processing metadata representing a contextual information of the image to obtain a second tensor representing the processed metadata,
- using a combinator, combining the first tensor and the second tensor to obtain a combination result, and
- providing the combination result to an image classification layer of an artificial neural network to obtain a classification result.

By combining image data and metadata, the method provides more context and information for the neural network to analyze. This can lead to a more accurate classification result, particularly in cases where image quality is low.

The method is not limited to a specific type of metadata, but may include various types such as image location, time of capture, and camera settings. This makes the approach flexible and applicable to a wide range of image classification tasks.

By using a separate metadata preprocessor, the method can quickly process metadata and integrate it with the image data before feeding it into the image classification layer. In some cases, this might improve the overall speed of the classification process.

The method can handle missing or incomplete metadata by assigning default values or using statistical imputation techniques. This can improve the robustness of the system and make it more reliable in real-world scenarios.

Overall, the method offers a powerful and flexible approach to image classification that can lead to improved accuracy and efficiency.

The method is particularly useful in applications where the accuracy of image classification is critical, such as in medical imaging or security applications.

In an embodiment, the combinator is a combination layer of the artificial neural network.

In an embodiment, the combinator comprises a concatenation layer and wherein combining the first tensor and the second tensor comprises concatenating the first tensor and the second tensor using the concatenation layer to obtain a tensor as the combination result. The implementation of the combinator as a concatenation layer has the advantages of simplicity and computational efficiency.

In an embodiment, the combinator comprises a transformer module using a multi-head attention mechanism and wherein combining the first tensor and the second tensor comprises mapping the extracted image data and the processed metadata together using the transformer module to obtain the combination result. The implementation of the combinator as a transformer module has the advantages of providing richer, adaptive feature representations depending on their relevance to the classification task. Further, a transformer module pretrained on a large dataset can be fine-tuned on specific tasks, potentially resulting in better performance with limited labeled data.

The combinator may also be kept separate from the artificial neural network with the associated advantage of reducing the computational load on the neural network itself and potentially speeding up training and inference times.

Therefore, each of the implementations mentioned above has its own set of advantages when combining the first tensor (extracted image data) and the second tensor (processed metadata). Choosing the most appropriate implementation may depend on factors such as the complexity of the data, the computational resources available, and the level of interpretability desired.

In an embodiment, the metadata comprises a plurality of context items and wherein processing the metadata comprising generating a plurality of encoded information, an encoded information representing a corresponding metadata context item, and combining the encoded information into the second tensor.

This approach allows the model to process and incorporate various types of context items, even if they have different data formats or structures. This can make the system more adaptable to diverse sources of contextual information. Further, encoding each context item individually allows the model to capture the unique contribution of each context item to the overall image classification task, potentially leading to improved classification accuracy.

### BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.
FIG. 1 depicts an exemplary application of a CNN for detecting and labelling objects in an input image.
FIG. 2 depicts an image classification system according to embodiments.
FIG. 3 depicts a preprocessing system according to embodiments.
FIG. 4 depicts a first implementation of an image classification system according to embodiments.
FIG. 5 depicts a second implementation of an image classification system according to embodiments.

### DETAILED DESCRIPTION OF THE INVENTION

Embodiments discussed herein are merely representative and do not limit the scope of the invention. It will also be obvious to one skilled in the art that all the technical features that are defined relative to a process can be transposed, individually or in combination, to a system and conversely, all the technical features relative to a system can be transposed, individually or in combination, to a process. It will also be obvious to one skilled in the art that all the technical features that are defined relative to a process or that can be transposed to such process may be provided, individually or in combination, as instructions of a computer program which may be stored, for instance, on a non-transitory storage medium, and which, when executed by a processing unit, cause the processing unit to carry out the process.

Image classification is a computer vision task that involves assigning predefined categories (labels) to an input image based on its visual content. There are various techniques for image classification, but the most common and successful approach in recent years is using deep learning, specifically Convolutional Neural Networks (CNNs).

In the context of image classification, an admissible input image can be broadly defined as any visual representation that can be processed by an image classification algorithm. This may include full images, portions of an image, or video frames. A full image is a complete visual representation captured by a camera or another imaging device. It may include a single object or scene, multiple objects or scenes, or a complex arrangement of shapes and colors. Portions of an image may refer to specific regions within a full image that are of interest for classification. These regions may be defined by boundaries or masks, and can be selected based on specific criteria such as object size, shape, or color. Video frames are similar to full images, but are extracted from video sequences and represent a single frame of a moving image. They can be used for image classification in the context of video analysis, where the goal is to classify objects or events in a video based on their visual appearance.

Here's a high-level overview of how CNNs work for image classification.

In a preprocessing step, the input image is resized, and often normalization or other transformations are applied to prepare the image for analysis.

CNNs use a series of convolutional layers to scan the input image and extract features, such as edges, textures, and shapes. The layers learn to recognize these features by applying a set of filters, which are adjusted during the training process to minimize the classification error.

Optionally, after each convolutional layer, an activation function (e.g., ReLU) is applied to introduce non-linearity into the model. This helps the network learn complex patterns and relationships in the data. Optionally, pooling layers reduce the spatial dimensions of the feature maps by aggregating local features. This reduces the computational complexity and helps the model become more invariant to small variations in the input image.

After the convolutional and pooling layers, the feature maps are flattened into a single vector, which is then fed into one or more fully connected layers. These layers perform the final classification by learning to map the extracted features to predefined labels.

The output layer produces a probability distribution over the labels, for instance by using a SoftMax activation function. The model assigns the input image to the label with the highest probability.

To train a CNN, a large labeled dataset is typically used, with each image paired with the correct category. The network adjusts its weights and biases through a process called backpropagation, which minimizes the classification error using known optimization techniques. Once trained, the CNN can be used to classify new, unseen images.

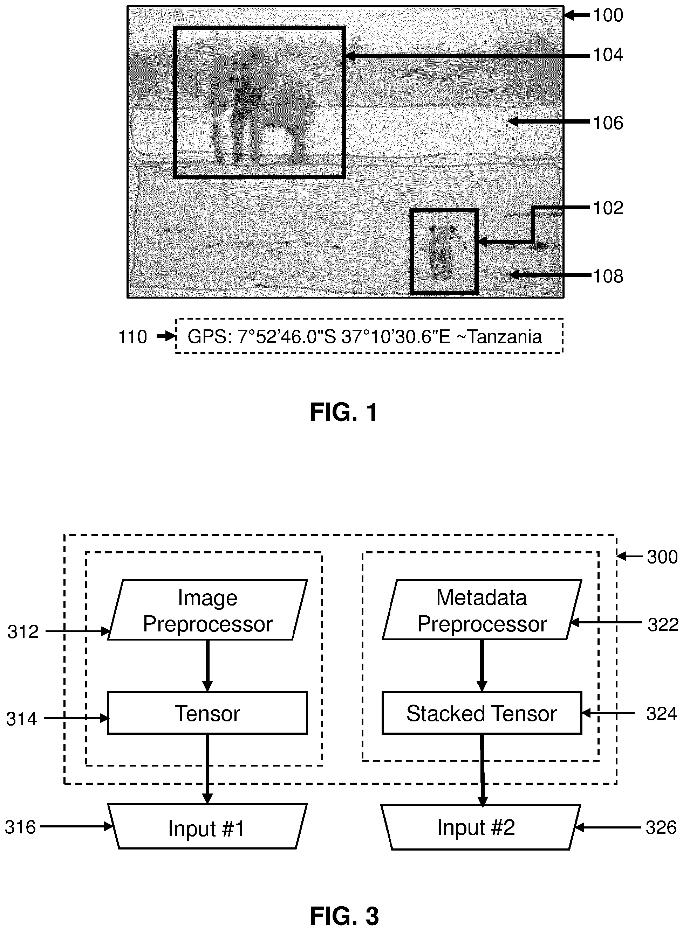

[FIG. 1] depicts an exemplary application of a CNN for the purpose of detecting and labelling elements in an input image (100).

In this exemplary application, the CNN independently labels each detected element and each label is associated to a confidence indicator. Specifically, four elements: two objects 102, 104 and two background areas 106, 108 are detected in the input image.

The detected elements are respectively labelled as following:
- the first object 102 is labelled as a cat, with 67% confidence,
- the second object 104 is labelled as an elephant, with 94% confidence,
- the first background area 106 is labelled as a lake or a pond, with 75% confidence, and
- the second background area 108 is labelled as sand or a desert, with 75% confidence.

A human would have used contextual information to correctly identify the animal as a baby lion. The presence of an elephant in the image is a useful contextual cue for a human to infer that the animal in question was a baby lion. The metadata (110) indicating that the picture was captured in Tanzania further reinforces this inference, as lions are native to Tanzania.

In contrast, the AI relied solely on visual features and did not take into account the broader context of the image. It is also possible that the training dataset plays a part in the incorrect identification, since the AI may have been trained predominantly on images of domestic cats rather than on images of baby lions.

Another example might be a misclassification of an image displaying football if in reality the image shows rugby, simply due to the structural and color similarity.

The present disclosure relates to an image classification system which overcomes these limitations due to incorporating contextual information and, optionally, elements of a Transformer model architecture.

The Transformer model is a particular type of ANN, introduced in the paper "Attention is all you need" (2017), Vaswani et al., arXiv:1706.03762. The Transformer model has been used in various applications, including image captioning. The attention mechanism of the Transformer model addresses the short memory of recurrent neural networks (RNN) such as long short-term memory (LSTM) for natural language processing tasks like translation. When used for image captioning, the Transformer model's attention mechanism is configured to generate textual descriptions of the image. The image analysis part of the network is also capable of locating different features' position in the image.

The present disclosure has numerous technical advantages, some of which are presented below.

By incorporating contextual information (such as text, location, time, or other metadata) alongside the image data, the image classification system can gain a more comprehensive understanding of the content. This additional information can help the model make better predictions, particularly in cases where the image data alone might be ambiguous or insufficient. Further, combining image data with contextual information allows the image classification system to engage in multimodal learning, where the model learns to understand and represent multiple types of data jointly. This can lead to a richer understanding of the problem domain and enable the model to tackle more complex tasks, such as image captioning, visual question answering, or scene understanding.

Transformer architectures have shown remarkable success in learning complex patterns and relationships in large-scale data, particularly when trained with self-supervised or semi-supervised learning techniques. By leveraging these methods, the image classification system can potentially learn more efficiently and generalize better to new, unseen data. Transformer-based models pretrained on large datasets have shown great success in transfer learning, where the model can be fine-tuned on a smaller, target dataset to achieve strong performance with limited training data. By incorporating Transformers into the image classification system, the model can potentially benefit from this transfer learning capability and achieve good results with limited labeled data. Transformers can handle long-range dependencies and are designed to scale well with large datasets and input sizes. By using Transformers in the image classification system, the model can potentially process and classify large images or sequences of images more effectively than traditional CNN-based approaches.

Further, the attention mechanisms in Transformer models provide a way to interpret which parts of the input (image and contextual information) contribute to the classification decision. This interpretability is a synergistic effect of including elements of a Transformer model architecture and of combining image data with contextual information.

These technical effects together can result in a more accurate, efficient, and versatile image classification system that can better understand and interpret complex relationships between visual and contextual data.

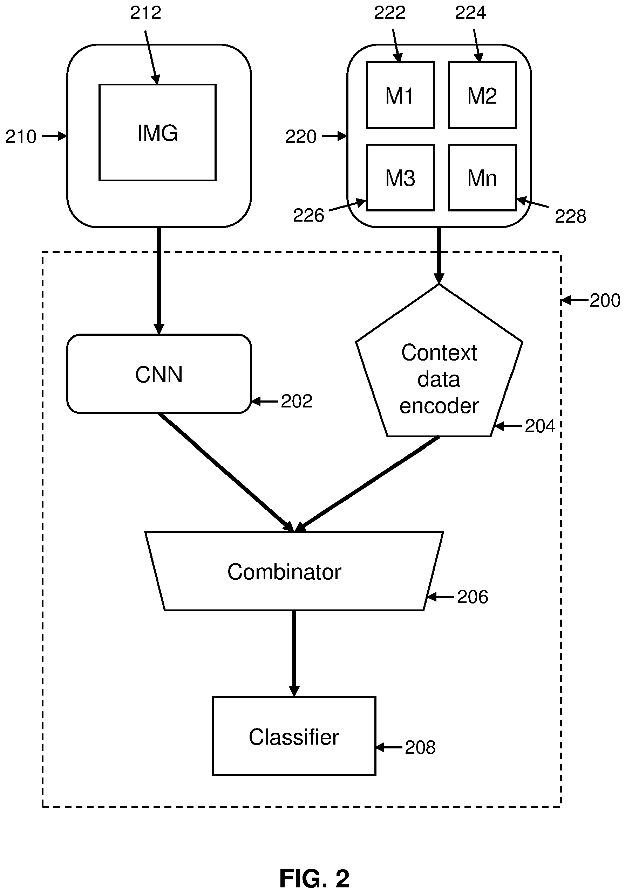

[FIG. 2] displays an image classification system 200 according to embodiments of the present disclosure. The image classification system 200 is adapted to receive an image 212 from a first input module 210 and metadata 222, 224, 226, 228 associated to the image 212 from a second input module 220. The image classification system 200 comprises a convolutional neural network (CNN) 202 which receives the image 212 from the first input module 210 and extracts features from the received image, a context data encoder 204 which processes and encodes the metadata 222, 224, 226, 228 received from the second input module 220, a combinator 206 which combines the extracted features and the encoded metadata, and a classifier 208 which processes the output from the combinator to classify the image. The system 200 is designed to improve image classification accuracy by combining image data with contextual information encoded in metadata.

The two input modules 210, 220 correlate with the nature of a Media Asset Management system (MAM). It on the one hand stores media assets and on the other it stores a wide range of different kinds of technical and descriptive metadata. This combination offers the possibility to harness all this information that could potentially be used as context data in the invention besides the reliance on only the visual data that is normally used in image classification.

Some technical challenges that are overcome by the present disclosure relate to preprocessing the metadata to be injected into the ANN and to combining the features extracted from the input image with the context information indicated by the metadata.

The preprocessing of the metadata to be injected into the ANN depends on the kind of metadata that someone wants to use in an ANN with context consideration. It has to be converted into some kind of matrix, vector or tensor in a binary or numerical representation of the data in order to satisfy the requirements of an ANN input. For this purpose, [FIG. 3] depicts a preprocessing system 300 according to embodiments of the present disclosure. The preprocessing system 300 is adapted to be interfaced with an image classification system 200 according to embodiments of the present disclosure.

The preprocessing system 300 comprises an image preprocessor 312 which receives as input the image 212 and outputs a tensor 314 representing the image 212, and a metadata preprocessor 322 which receives as input the metadata 222, 224, 226, 228 associated to the image 212 and outputs a stacked tensor 324 representing the metadata 222, 224, 226, 228.

The preprocessing modules allows reshaping the inputs by offering several preprocessing options, such as normalization, scaling or binarization, among others. Each of these options results in a different size and format for the resulting tensor 314 and stacked tensor 324. In an embodiment, the tensor 314 is structured as a multidimensional array: for each of a plurality of color channels there is a corresponding matrix with a size of length times height. In an embodiment, the encoding chosen for processing the metadata to output the stacked sensor 324 is one-hot.

The tensor 314 and the stacked tensor 324 may then be inserted into the image classification system as two distinct inputs 316, 326. The use of tensors enables faster processing and improved accuracy in image classification, particularly in applications where speed and accuracy are critical.

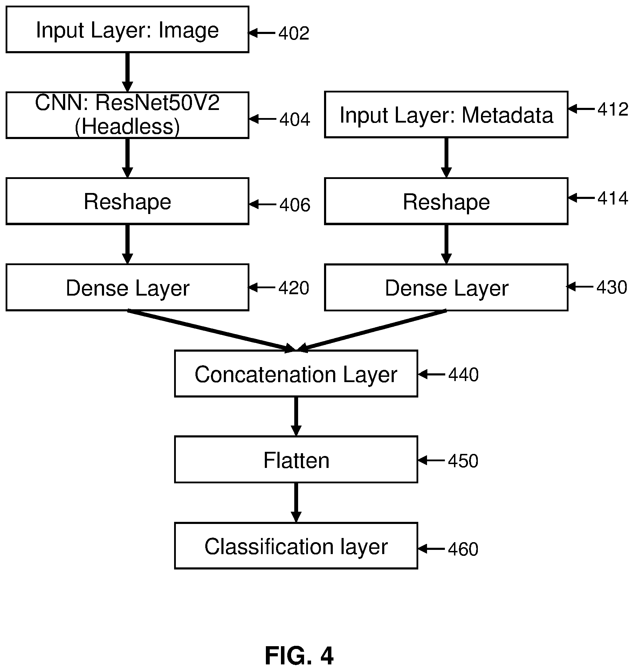

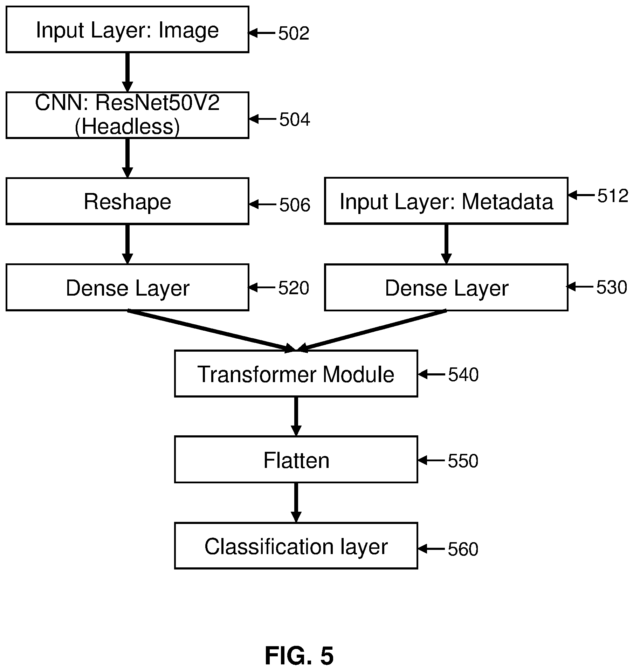

With respect to how to combine the features extracted from the input image with the context information indicated by the metadata, a first exemplary implementation of the image classification system 200 is depicted in [FIG. 4] and a second exemplary implementation of the image classification system 200 is depicted in [FIG. 5].

By comparing the diagrams of the two exemplary implementations it can be observed that the high-level architectures have similarities which are now described.

A first input layer (402, 502) receives an input image and provides this input image to a headless CNN. A headless convolutional neural network (CNN) refers to a CNN that has had its output layer, also known as the "head," removed or disconnected from the rest of the network. In a typical CNN architecture, the head consists of one or more fully connected layers that take the features extracted by the convolutional layers and produce a final output, such as a probability distribution over different classes. By removing the head, the network becomes a feature extractor that generates a fixed-length vector of features for the input image. In the depicted exemplary embodiments, a headless ResNet50V2 CNN (404, 504), as described in "Deep Residual Learning for Image Recognition" (2015), He et. Al, arXiv:1512.03385, was chosen for this purpose.

The extracted visual features are reshaped by a first reshaping module (406, 506) then passed through a first set of one or more hidden dense layers (420, 520) to generate a set of higher-level features related to the input image.

In parallel, a second input layer (412, 512) receives metadata of the input image.

A second set of one or more hidden dense layers (430, 530) generates a set of features related to the metadata.

The set of higher-level features related to the input image are combined, by a combinator (440, 540), with the set of features related to the metadata.

The result of the combination is flattened by a flattening module (450, 550) and passed down to a classification layer (460, 560) which ultimately classifies the image.

The difference between the two exemplary implementations described above lies in the operations of the combinator (440,450), as well as in the operations performed to preprocess the metadata to fit the combinator (440, 450).

In the exemplary embodiment depicted in [FIG. 4], the combinator is configured to concatenate the set of higher-level features related to the input image and the set of features related to the metadata. This configuration is a simple way of building a mechanism that combines the two different sources of data in an ANN. This configuration is hereafter referred to as the "concatenation model". For this purpose, the combinator (440) may include a concatenation layer implemented for instance using Tensorflow (TF). By using a concatenation layer, the combinator can effectively combine the encoded visual features and encoded metadata into a single tensor that preserves both the visual and contextual information in the input data. The exemplary embodiment depicted in [FIG. 4] further includes a reshaping module (414) which reshapes the metadata received by the second input layer (412) before passing the reshaped metadata down to the second set of one or more hidden dense layers (430). The reason for reshaping the metadata before passing it to the hidden dense layer is related to the requirements of the concatenation operation: the inputs of a concatenation operation must have the same dimensions.

Alternatively, as depicted in [FIG. 5], the combinator (450) can include a Transformer module which uses the multi-head attention (MHA) mechanism to combine the encoded visual features and encoded metadata into a single tensor, thusly significantly improving the result of the classification. The self-attention mechanism in the transformer module can learn which parts of the input tensor are relevant for the classification task. In embodiments, the shape of the metadata may correspond to the shape of the image features obtained from the dense layer. For instance, the image features coming out of the dense layer may be (3, 8) while the metadata may be provided with a shape of (1, 8). By utilizing the transformer module, the metadata can then be processed without the need for reshaping, resulting in a tensor of (1, 8).

A downside of the Transformer module over the concatenation layer is the need for more computational resources and longer training times due to the increased complexity of the network.

A comparative test of three image classification systems has been conducted in the framework of a project for recording, managing, and distributing sports media content in Europe. To conduct the comparative test, a training dataset and a test dataset were created with eleven of the most popular sports in Europe and enriched with textual descriptive metadata. The labels were assigned to each of the sports categories.

The first contemplated image classification system is a state-of-the-art classification system built around a plain CNN without context consideration.

The second contemplated image classification system is implemented as depicted in [FIG. 4]. It therefore includes a concatenation layer for combining image, or visual, features and metadata, or context, features.

The third contemplated image classification system is implemented as depicted in [FIG. 5. It therefore includes a Transformer module for combining image, or visual, features and metadata, or context, features.

Upon comparing the results of the three contemplated image classification system, a consistent increase in accuracy across all classes has been observed with each iteration.

The second image classification system outperforms the first one, showing the benefit in merely incorporating contextual information. However, the third image classification system demonstrates an even greater improvement, demonstrating that leveraging context information in an artificial neural network (ANN) is not only feasible but also advantageous in terms of accuracy.

## Claims

1. Method implemented by computer means for classifying images, the method comprising:
- using an image preprocessor, extracting image data representing at least one image feature of an image to obtain a first tensor representing the extracted image data,
- using a metadata preprocessor, processing metadata representing a contextual information of the image to obtain a second tensor representing the processed metadata,
- using a combinator, combining the first tensor and the second tensor to obtain a combination result, and
- providing the combination result to an image classification layer of an artificial neural network to obtain a classification result.

2. Method according to claim 1, wherein the combinator is a combination layer of the artificial neural network.

3. Method according to claim 2, wherein the combinator comprises a concatenation layer and wherein combining the first tensor and the second tensor comprises concatenating the first tensor and the second tensor using the concatenation layer to obtain a tensor as the combination result.

4. Method according to claim 2, wherein the combinator comprises a transformer module using a multi-head attention mechanism and wherein combining the first tensor and the second tensor comprises mapping the extracted image data and the processed metadata together using the transformer module to obtain the combination result.

5. Method according to any one of claims 1 to 4, wherein the metadata comprises a plurality of context items and wherein processing the metadata comprising generating a plurality of encoded information, an encoded information representing a corresponding metadata context item, and combining the encoded information into the second tensor.

6. Computer system for classifying images, the computer system comprising:
- an image preprocessor configured to extract image data representing at least one image feature of an image to obtain a first tensor representing the extracted image data,
- a metadata preprocessor configured to process metadata representing a contextual information of the image to obtain a second tensor representing the processed metadata,
- a combinator configured to combine the first tensor and the second tensor to obtain a combination result, and
- an artificial neural network comprising an image classification layer configured to obtain a classification result from the combination result.

7. Computer program comprising instructions which, when the program is executed by a computer, cause the computer to carry out the method of any one of claims 1 to 5.
